# EUROPÄISCHE PATENTSCHRIFT

(11) **EP 3 098 034 B1**
(45) Veröffentlichungstag und Bekanntmachung des Hinweises auf die Patenterteilung: **03.03.2021**
(21) Anmeldenummer: 16171300.3
(22) Anmeldetag: 25.05.2016
(51) Int. Cl.: B25J 9/16

(54) **AUSWAHL EINES GERÄTES ODER EINES OBJEKTES MIT HILFE EINER KAMERA**
SELECTING AN APPARATUS OR AN OBJECT USING A CAMERA
SELECTION D'UN APPAREIL OU D'UN OBJET A L'AIDE D'UNE CAMERA

(30) Priorität: 29.05.2015 DE 102015209899
(43) Veröffentlichungstag der Anmeldung: 30.11.2016
(73) Patentinhaber: KUKA Deutschland GmbH, 86165 Augsburg (DE)
(72) Erfinder: HIETMANN, Gerhard, 86405 Herbertshofen (DE)
(74) Vertreter: Mader, Joachim

(56) Entgegenhaltungen:
- EP-A2- 1 447 770
- WO-A1-2015/055668
- KAZUHIRO HOSOI ET AL: "Shepherd: An Interface for Overcoming Reference Frame Transformations in Robot Control", ROBOTICS AND BIOMIMETICS, 2006. ROBIO '06. IEEE INTERNATIONAL CON FERENCE ON, IEEE, PI, 1. Dezember 2006 (2006-12-01), Seiten 908-913, XP031068907, ISBN: 978-1-4244-0570-1
- Sunao Hashimoto ET AL: "TouchMe: An Augmented Reality Based Remote Robot Manipulation", The 21st International Conference on Artificial Reality and Telexistence, Proceedings of ICAT 2011, 1. Januar 2011 (2011-01-01), Seiten 1-6, XP055307707, Gefunden im Internet: URL:http://citeseerx.ist.psu.edu/viewdoc/d ownload?doi=10.1.1.699.4793&rep=rep1&type= pdf [gefunden am 2016-10-05] & Anonymous: "CiteSeerX - TouchMe: An Augmented Reality Based Remote Robot Manipulation", , 1. Januar 2011 (2011-01-01), XP055307709, Gefunden im Internet: URL:http://citeseerx.ist.psu.edu/viewdoc/s ummary?doi=10.1.1.423.4194&rank=7&q=text:t ouchme AND year:[2011 TO 2012]&osm=&ossid= [gefunden am 2016-10-05]
- designinterface: "TouchMe: An Augmented Reality Based Remote Robot Manipulation", YouTube, 5. Dezember 2011 (2011-12-05), Seiten 1-1, XP054976818, Gefunden im Internet: URL:https://www.youtube.com/watch?v=I_tmHL eKTkg [gefunden am 2016-10-06]

## Beschreibung

### 1. Technischer Bereich

Die vorliegende Erfindung betrifft ein Verfahren zum Auswählen und Ansteuern eines Manipulator-Systems mittels eines tragbaren Endgerätes, als auch ein entsprechendes tragbares Endgerät und ein Manipulator-System.

### 2. Technischer Hintergrund

Ein Manipulator, und insbesondere ein Industrieroboter, ist ein freiprogrammierbares, programmgesteuertes Handhabungsgerät. Solch ein Manipulator kann aus mehreren beweglichen, aneinander geketteten Gliedern oder Achsen bestehen, wodurch eine kinematische Kette definiert wird.

Um einen Manipulator nutzen zu können, muss dieser üblicherweise in Betrieb genommen werden und programmiert werden. Während der Inbetriebnahmephase werden die Voraussetzungen für eine später folgende Programmierung eines Manipulatorprogramms erzeugt. Somit wird bei einer Inbetriebnahme unter anderem, zum Beispiel, ein Manipulator justiert, ein Endeffektor oder Werkzeug (wie beispielsweise ein Greifer) des Manipulators parametrisiert, ein oder mehrere Laserscanner einer mobilen Plattform kalibriert, Arbeits- und Sperrbereiche eines Manipulators definiert, robotergeführte oder stationäre Kameras parametrisiert, oder auch Koordinatensysteme, wie beispielsweise ein Basiskoordinatensystem, definiert.

Bei der Erstellung eines Manipulatorprogramms können verschiedene Anweisungen zur Nutzung von Geräten und/oder Objekten erstellt und in eine gewünschte Abfolge gebracht werden. Dabei kann zum Beispiel definiert werden, dass ein Manipulator auf eine bestimmte Art zwischen einem Start- und Zielpunkt verfahren soll, eine mobile Plattform sich entlang einer bestimmten Bahn bewegen soll, ein Endeffektor eine gewünschte Aktion durchführen soll, oder Bilder durch eine Kamera aufgenommen werden sollen, etc.

Die Inbetriebnahme oder Programmierung eines Manipulators wird häufig vor Ort mit Hilfe eines tragbaren Bediengerätes durchgeführt. Zur Strukturierung der durchzuführenden Aufgaben und/oder steuerbaren Objekte des Manipulators nutzt die Bedienoberfläche des Bediengerätes üblicherweise eine Baum-/ oder Menüstruktur. Diese kann dabei unterschiedlich ausgeprägt sein, und zum Beispiel funktions- oder objekt- bzw. geräteorientiert gegliedert sein. Allerdings ist die Verwendung einer solchen Baumstruktur meistens unübersichtlich, da üblicherweise eine größere Anzahl von Geräten, Objekten und/oder Aufgaben abgebildet bzw. bereitgestellt werden muss. Eine Suche nach einem richtigen Menüpunkt für eine entsprechende Aufgabe, die der Anwender durchführen möchte, gestaltet sich somit oft als mühsam: Der Anwender oder Bediener muss aufwendig durch die Baumstruktur navigieren, bis er ein passendes Element gefunden hat. Der Beitrag "Shepherd: An Interface for Overcoming Reference Frame Transformations in Robot Control" von Kazuhiro Hosoi et al, in "Proceedings of the 2006 IEEE International Conference on Robotics and Biomimetics, Dezember 17-20, 2006,Kunming, China" beschreibt ein System, welches es einem Benutzer erlaubt, einen Roboter zu steuern.

Der Beitrag "TouchMe: An Augmented Reality Based Remote Robot Manipulation" von Sunao Hashimoto et al., in "The 2ist International Conference on Artificial Reality and Teleexistcncc, Proceedings of ICAT 2011" beschreibt ein gestenbasiertes Interface zum Steuern eines Roboters.

Das Youtube-Video "Touchme: an augmented reality based remote robotmanipulation", https://www.youtube.com/watch?v=I_tmHLeKTkg, zeigt ein Verfahren zum Steuern eines Roboters.

Es ist somit eine Aufgabe der vorliegenden Erfindung, eine Methode bereitzustellen, mit welcher eine einfache und intuitive Auswahl einer Manipulatorsteuerungsaufgabe möglich ist. Es ist dabei insbesondere eine Aufgabe der vorliegenden Erfindung, eine Methode bereitzustellen, mit welcher ohne großen Aufwand ein Manipulator bzw. Roboter direkt angesteuert werden kann. Ferner ist es eine Aufgabe der vorliegenden Erfindung, ein Bediengerät und ein Manipulator-System bereitzustellen, mit welcher ein Manipulator angesteuert werden kann, wobei die oben genannten Nachteile zumindest teilweise beseitigt werden.

Diese und weitere Aufgaben, welche beim Lesen der folgenden Beschreibung ersichtlich werden, werden durch den Gegenstand des Hauptanspruchs und der Nebenansprüche gelöst.

### 3. Inhalt der Erfindung

Ein Aspekt der vorliegenden Erfindung umfasst ein Verfahren zum Ansteuern eines Manipulator-Systems mittels eines tragbaren Endgerätes. Das Manipulator-System kann dabei mehrere Manipulatoren bzw. Roboter umfassen, zum Beispiel einen auf einem autonomen fahrerlosen Transportfahrzeug installierten Gelenkarmroboter. Das tragbare Endgerät wiederum kann beispielsweise ein Roboter-Bediengerät, oder auch ein mobiles Konsumer-Gerät (wie beispielsweise ein Tablet-PC, ein Smartphone, eine Smartwatch, oder ähnliches), sein. Jedenfalls umfasst das tragbare Endgerät vorzugsweise eine Kamera, welche es erlaubt, Bilder von einem Motiv zu erfassen. Insbesondere vorzugsweise ist die Kamera eine 3D-Kamera, welche es erlaubt, dreidimensionale Bilder von einem Motiv zu erfassen.

Das erfindungsgemäße Verfahren weist ein Erfassen eines Bildes mittels der Kamera des tragbaren Endgeräts von zumindest einem Teil des anzusteuernden Manipulator-Systems auf. Es kann beispielsweise ein Roboterarm des Manipulator-Systems erfasst werden, oder beispielsweise ein Greifer, welcher angesteuert werden soll. Vorzugsweise wird ein Bild von jenem Teil des Manipulator-Systems erfasst, welches angesteuert werden soll.

Ferner umfasst das Verfahren ein Ermitteln eines Features des Manipulator-Systems basierend auf dem erfassten Bild. Das Features, oder auch Merkmal des Manipulator-Systems, ist dabei charakteristisch für das Manipulator-System, so dass dieses anhand des ermittelten Features zugeordnet (identifiziert) werden kann.

Weiterhin umfasst das Verfahren ein Identifizieren von zumindest einem ansteuerbaren Objekt des Manipulator-Systems basierend auf dem ermittelten Feature, und ein Ansteuern des Manipulator-Systems. Anhand des ermittelten Features wird somit ein Objekt identifiziert, welches ansteuerbar ist (wie z. B. ein Greifer des Manipulators).

Somit erlaubt es das erfindungsgemäße Verfahren, in beispielsweise jeder Phase der Erstellung einer Applikationsaufgabe das benötigte Gerät oder benötigte Objekt eines Manipulator-Systems intuitiv auszuwählen und anzusteuern, um beispielsweise für dieses Objekt eine Parametrisierung, Aktion, Diagnose oder dergleichen durchzuführen. Ein mühsames Durchsuchen von Menübäumen und/oder Anweisungslisten ist dabei nicht erforderlich. Ein Benutzer des tragbaren Endgerätes muss lediglich das Bild mittels der Kamera erfassen, woraufhin automatisch ein oder mehrere ansteuerbare Objekte des Manipulator-Systems identifiziert werden. Der Anwender kann dabei vorzugsweise in jeder Position und Orientierung zu dem Manipulator-System stehen, und jederzeit durch beispielsweise Aktivieren der Kamera Kontext-bezogene oder auch Kontext-unabhängige Funktionen oder Informationen für einen Manipulator oder ein Objekt oder Gerät des Manipulator-Systems erhalten.

Vorzugsweise ist die Kamera eine 3D-Kamera, und das mittels dieser 3D-Kamera erfasste Bild ist ein dreidimensionales Bild. Die Verwendung einer 3D-Kamera hat dabei u.a. den Vorteil, dass sich der Bediener des tragbaren Endgerätes auch in einer größeren (und somit sicheren) Entfernung zu dem anzusteuernden Manipulator-System befinden kann. Vorteilhaft muss nur ein Bild erfasst werden, da das resultierende dreidimensionale Bild ausreichend Informationen beinhaltet, um das erfindungsgemäße Verfahren durchzuführen.

Vorzugsweise umfasst das erfindungsgemäße Verfahren weiterhin ein Bereitstellen von Referenz-Datensätzen des anzusteuernden Manipulator-Systems. Insbesondere vorzugsweise kann dieses Bereitstellen von Referenz-Datensätzen ein Einlernen von zumindest dem ansteuerbaren Objekt des Manipulator-Systems mittels des tragbaren Endgerätes umfassen. Beispielsweise kann ein Anwender in einem Lern-Modus eines oder alle Geräte und Objekte eines Manipulator-Systems einlernen. Dabei wird beispielsweise mittels der 3D-Kamera jedes Gerät oder Objekt aus mehreren Richtungen abgebildet, und jedes Gerät oder Objekt anhand der Abbildungen definiert. Diese Referenz-Datensätze dienen später zur Identifizierung des anzusteuernden Manipulatorsystems bzw. von Objekten des Systems.

Vorzugsweise umfasst das Ermitteln des Features des Manipulator-Systems ferner ein Durchführen eines Bilderkennungsprozesses, welcher das Feature auf Grundlage von dem erfassten dreidimensionalen Bild und den vorzugsweise bereitgestellten Referenz-Datensätzen erkennt. Somit wird beispielsweise durch Vergleich des dreidimensionalen Bildes mit den bereitgestellten Referenz-Datensätzen ein Feature erkannt, welches Feature auch in dem dreidimensionalen Bild enthalten ist. Beispielsweise kann dieses Feature ein Teil eines Greifers sein, welches charakteristisch für diesen Greifer ist. Somit ist es möglich, das Manipulator-System ohne großen Bedienaufwand anzusteuern.

Vorzugsweise umfasst das tragbare Endgerät eine Darstellungsvorrichtung, welche wiederum vorzugsweise ein Touch-Panel umfasst. Dieses Touch-Panel (oder Touch-Screen, Touch-Display, berührungsempfindlicher Bildschirm oder Berührungsbildschirm) ist dabei ein kombiniertes Ein- und Ausgabegerät, mit welchem ein Bediener durch Berührung von Teilen des Panels oder Bildschirms interagieren kann. Ferner umfasst das Verfahren vorzugsweise ein Darstellen des erfassten dreidimensionalen Bildes auf der Darstellungsvorrichtung des tragbaren Endgerätes. Somit kann ein Benutzer des tragbaren Endgerätes sofort das Bild des zumindest einen Teils des anzusteuernden Manipulator-Systems sehen und vorteilhaft feststellen, ob ein passendes Bild erfasst wurde oder nicht, also ob beispielsweise jenes Objekt des Manipulator-Systems erfasst wurde, welches angesteuert werden soll.

Ferner vorzugsweise weist das Verfahren weiterhin ein Darstellen einer optischen Markierung auf der Darstellungsvorrichtung des tragbaren Endgerätes auf, welche optische Markierung das identifizierte Objekt des Manipulator-Systems spezifiziert. Somit wird auf der Darstellungsvorrichtung direkt visualisiert, welches Objekt identifiziert bzw. erkannt wurde. Folglich wird auf einfache und intuitive Art und Weise einem Benutzer eine direkte Rückmeldung oder ein direktes Feedback bereitgestellt.

Weiter vorzugsweise umfasst das Ansteuern des Manipulator-Systems ein Anwählen des identifizierten Objekts des Manipulator-Systems durch einen Benutzer des tragbaren Endgerätes. Der Benutzer wählt also aktiv, mittels des tragbaren Endgerätes, das identifizierte Objekt aus, welches vorzugsweise anzusteuern ist. Hierzu kann beispielsweise ein Benutzer auf einem Touch-Panel ein Objekt (wie etwa einen Greifer) antippen, welches vorzugsweise identifiziert wurde, und weiter vorzugsweise mit einer entsprechenden optischen Markierung auf der Darstellungsvorrichtung, also dem Touch-Panel, markiert und spezifiziert ist. Anschließend kann sich beispielsweise der Greifer, in Reaktion auf das Antippen, öffnen oder schließen. Vorzugsweise umfasst das Anwählen des identifizierten Objekts des Manipulator-Systems somit ein Anwählen der optischen Markierung auf der Darstellungsvorrichtung des tragbaren Endgeräts. Der Benutzer kann also direkt erkennen, welche Objekte des dargestellten Bildes angewählt und angesteuert werden können.

Vorzugsweise werden zumindest zwei Objekte des Manipulator-Systems identifiziert, und zumindest zwei optische Markierungen werden auf der Darstellungsvorrichtung des tragbaren Endgerätes dargestellt, wobei jede optische Markierung eines der identifizierten Objekte des Manipulator-Systems spezifiziert. Folglich weist das Manipulator-System zumindest zwei ansteuerbare Objekte auf, und ein Benutzer kann intuitiv direkt erkennen, welche Objekte er auswählen und ansteuern kann, wobei vorteilhaft ein mühsames Durchsuchen von Menübäumen und dergleichen entfällt.

Vorzugsweise umfasst das Ansteuern des Manipulator-Systems ein Ansteuern des identifizierten Objekts des Manipulator-Systems. Es wird also vorzugsweise genau das Objekt angesteuert, welches identifiziert wurde. Beispielsweise kann ein Benutzer das tragbare Endgerät derart ausrichten, dass ein dreidimensionales Bild eines Objektes, wie etwa eines Greifers, erfasst wird, dieser identifiziert wird und direkt angesteuert wird, so dass der Greifer beispielsweise geschlossen wird wenn er offen war, oder umgekehrt. Auf diese Weise lässt sich für spezifische Aufgaben somit eine sehr intuitive und effiziente Nutzung des Manipulator-Systems realisieren, ohne mühsam in Menübäumen oder Anweisungsbäumen navigieren zu müssen. Falls mehr als ein ansteuerbares Objekt identifiziert wurde, kann vorzugsweise jenes Objekt direkt angesteuert werden, welches sich am nächsten zur Bildmitte des erfassten dreidimensionalen Bildes befindet. Somit kann ein Benutzer durch geeignetes Ausrichten der 3D-Kamera beeinflussen, welches Objekt des Manipulator-Systems mittels des erfindungsgemäßen Verfahrens angesteuert werden soll.

Vorzugsweise umfasst das Ansteuern des Manipulator-Systems ein Anfragen, Bereitstellen, Erstellen und/oder Ändern von Daten des Manipulator-Systems, wobei diese Daten vorzugsweise zumindest eines der Folgenden beschreiben: Justage und/oder Orientierung eines Manipulator-Systems, Parametrisierung eines Endeffektors, Kalibrierung des Manipulators und/oder des Endeffektors, Definition eines Arbeitsbereiches, Parametrisierung des Objektes des Manipulator-Systems, Definition eines Koordinatensystems oder einen Programmablauf. Das Koordinatensystem kann dabei beispielsweise ein Basis-, Roboter-, Werkzeug- oder Flanschkoordinatensystem sein, wobei diese Liste nicht abschließend ist. Folglich kann mittels des erfindungsgemäßen Verfahrens intuitiv eine Inbetriebnahme eines Manipulators durchgeführt werden. Der Programmablauf kann mittels des Verfahrens insbesondere bei einer Programmierung eines Manipulators erstellt werden. Ein solcher Programmablauf kann dabei einzelne Bahnpunkte und Bewegungen zwischen diesen beschrieben. Durch beispielsweise Erstellen und/oder Ändern von Daten, die einen Programmablauf beschreiben, kann der Programmierer mittels des Verfahrens einfach und intuitiv eine Programmierung eines Manipulators durchführen. Der Fachmann versteht dabei, dass das Ansteuern des Manipulator-Systems indirekt erfolgen kann, indem der Programmierer eine Programmierung des Manipulators beispielsweise offline durchführt, und der Manipulator zu einem späteren Zeitpunkt anhand des erstellten Programmablaufs bewegt wird.

Vorzugsweise umfasst das Ansteuern des Manipulator-Systems ein Erstellen, Ändern und/oder Durchführen einer Funktion oder eines Programms, wodurch vorzugsweise zumindest eines der Folgenden durchgeführt wird: Aktion eines Endeffektors (wie beispielsweise Öffnen oder Schließen eines Greifers), Bewegung des Objektes des Manipulator-Systems, Steuerung des Objektes des Manipulator-Systems, Bewegung eines Manipulators, Steuerung des Manipulators oder Änderung eines Programmablaufs. Somit lässt sich beispielsweise eine Programmierung eines Manipulators leicht und intuitiv durchführen.

Vorzugsweise umfasst das Verfahren ferner ein Darstellen von kontextabhängigen Daten unter Berücksichtigung des ermittelten Features mittels der Darstellungsvorrichtung. Das Darstellen der kontextabhängigen Daten erfolgt dabei vorzugsweise weiter unter Berücksichtigung einer Benutzereingabe. So kann die Darstellung auf der Darstellungsvorrichtung beispielsweise abhängig davon sein, ob ein Inbetriebnahme-Modus oder Programmier-Modus gewählt ist. Im Inbetriebnahme-Modus können beispielsweise geometrische Abmessungen eines Greifers, Gewichtswerte, Massenschwerpunkte, Trägheitswerte, Volumenmodelle, Zuordnungen von Ein-/Ausgängen etc. dargestellt werden, wenn ein Greifer angewählt ist. Durch Anwählen beispielsweise eines Laserscanners kann ein Menü zur Kalibrierung dieses Lasers dargestellt werden. Im Programmier-Modus hingegen können dem Programmierer Aktionen dargestellt werden, die mit einem Greifer durchführbar sind (wie bspw. Greifer öffnen/schließen), sollte der Greifer angewählt sein. Durch Anwählen eines Roboterarms im Programmier-Modus können mögliche Aktionen, die der Roboterarm durchführen kann (wie bspw. eine lineare Bewegung), dargestellt werden. Diese kontextabhängigen Informationen unterstützen den Bediener zusätzlich und erlauben ein intuitives Arbeiten.

Vorzugsweise ist die 3D-Kamera eine plenoptische Kamera, welche auf dem Prinzip von Lichtfeldsensoren basiert. Derartige Lichtfeldsensoren bestehen aus einem Feld von Mikrolinsen, und halten das Licht und die Farbe des fotografierten Objekts fest. Ferner wird auch die Richtung erfasst, aus welcher die Lichtstrahlen eintreffen. Mit Hilfe von Lichtfeldsensoren lässt sich somit unter anderem der Fokus des Bildes im Nachhinein verändern, und es können 3D-Modelle von abgelichteten Objekten erstellt werden. Vorzugsweise umfasst das Erfassen des dreidimensionalen Bildes ein Erfassen eines vierdimensionalen Lichtfeldes mittels der plenoptischen Kamera von dem zumindest einen Teil des anzusteuernden Manipulator-Systems. Somit kann ein Feature des Manipulator-Systems basierend auf dem erfassten Bild mit einer hohen Genauigkeit ermittelt werden.

Ein weiterer Aspekt der vorliegenden Erfindung betrifft ein tragbares Endgerät, umfassend eine Kamera und eine Gerätesteuerung, wobei die Gerätesteuerung eingerichtet ist ein erfindungsgemäßes Verfahren zum Ansteuern eines Manipulator-Systems zu führen. Das tragbare Endgerät kann dabei vorteilhaft eine kleine Größe haben, da eine umständliche Anzeige von Baumstrukturen nicht erforderlich ist. Vorzugsweise ist die Kamera dabei eine 3D-Kamera.

Ein weiterer Aspekt der vorliegenden Erfindung betrifft ein Manipulator-System, umfassend einen Manipulator und ein tragbares Endgerät, welches eine Kamera umfasst, wobei das Manipulator-System ferner eine Manipulatorsteuerung aufweist, welche eingerichtet ist ein erfindungsgemäßes Verfahren zum Ansteuern des Manipulator-Systems durchzuführen. Vorzugsweise ist die Kamera dabei eine 3D-Kamera. Insbesondere vorzugsweise ist die Kamera des tragbaren Endgerätes eine plenoptische Kamera.

### 4. Ausführungsbeispiele

Im Folgenden wird die vorliegende Erfindung anhand der beiliegenden Zeichnungen im Detail beschrieben. Dabei zeigen:
Fig. 1 beispielhaft ein Manipulator-System;
Figs. 2 und 3 beispielhafte Ansichten eines tragbaren Endgeräts, und
Fig. 4 schematisch einen beispielhaften Ablauf eines erfindungsgemäßen Verfahrens zum Ansteuern eines Manipulator-Systems.

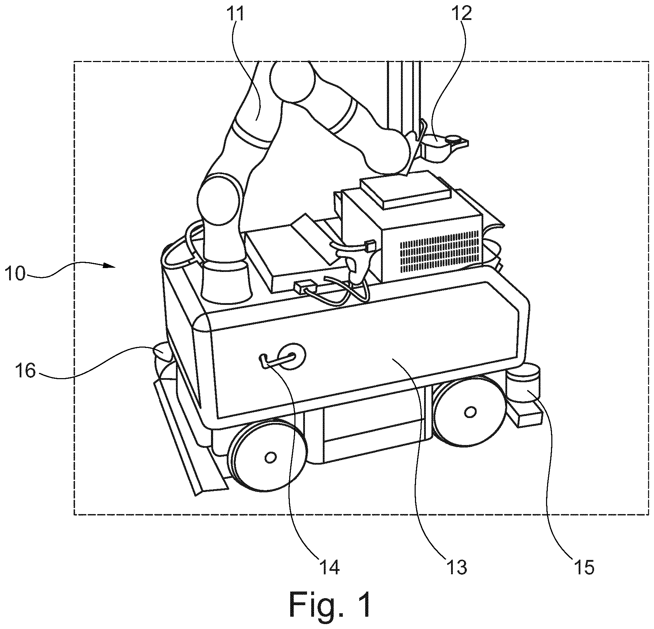

In der Fig. 1 ist beispielhaft ein Manipulator-System 10 dargestellt, welches sich unter anderem aus einem Gelenkarmroboter 11 und einem autonomen Transportfahrzeug 13 zusammensetzt. Das Manipulator-System 10 umfasst dabei mehrere ansteuerbare Objekte, wie beispielsweise den Gelenkarmroboter 11 selbst, einen Greifer 12 des Gelenkarmroboters 11, das autonome Transportfahrzeug 13 selbst, oder diverse Sensoren 14, 15, 16, welche beispielsweise Laserscanner umfassen können. Um das Manipulator-System 10 im Sinne der vorliegenden Erfindung anzusteuern, nimmt ein Benutzer eines tragbaren Endgerätes, welches eine 3D-Kamera umfasst, ein Bild mittels der 3D-Kamera auf.

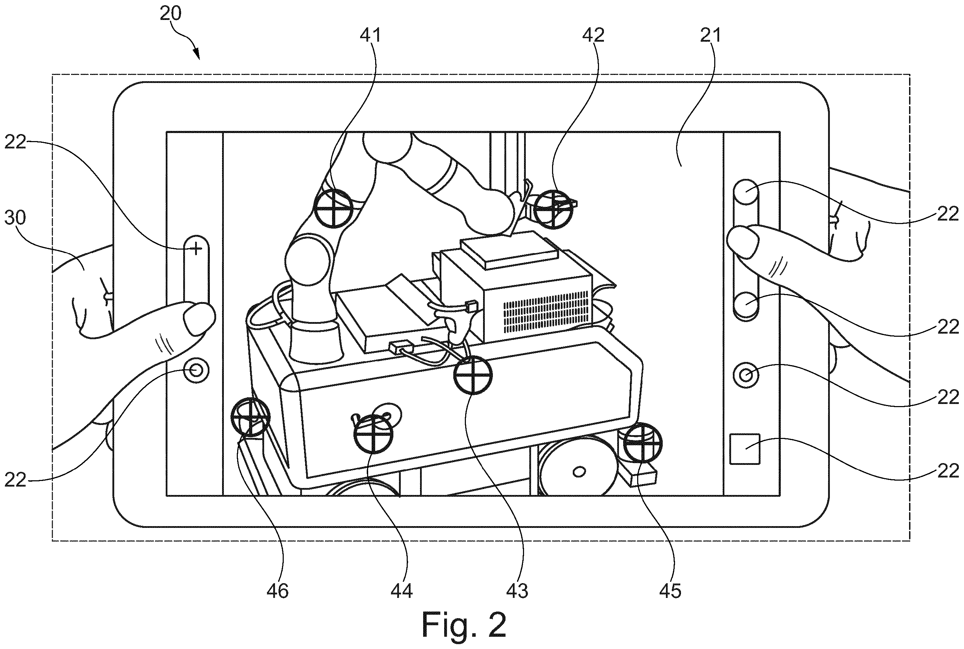

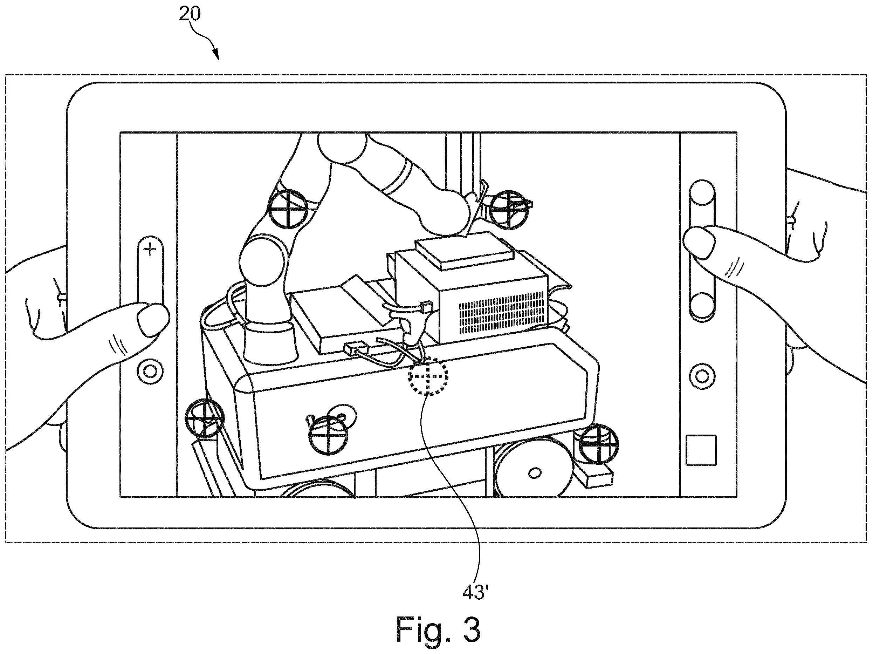

In der Fig. 2 ist ein solches tragbares Endgerät 20 beispielhaft dargestellt, welches ein Touch-Display 21 aufweist, und von einem Bediener 30 bedient wird. Auf dem Touch-Display 21 ist ein mittels des tragbaren Endgerätes 20 erfasstes Bild des Manipulator-Systems 10 aus Fig. 1 dargestellt. Im Sinne der vorliegenden Erfindung wurden mehrere ansteuerbare Objekte des Manipulator-Systems 10 identifiziert, und durch entsprechende Markierungen 41, 42, 43, 44, 45, 46 in dem Touch-Display markiert bzw. spezifiziert. Um eines der identifizierten Objekte auszuwählen, kann der Bediener 30 beispielsweise auf die gewünschte Markierung des anzusteuernden Objektes auf dem Touch-Display tippen, um dieses intuitiv zu selektieren und entsprechend anzusteuern. Wie in Fig. 3 durch das Bezugszeichen 43' angedeutet, kann das ausgewählte ansteuerbare Objekt mit einer besonderen Markierung markiert werden, dessen Farbe sich z.B. von den übrigen Markierungen unterscheidet. Beispielsweise wurde das autonome Transportfahrzeug 13 ausgewählt, welches nun durch eine Markierung 43' markiert ist, die sich farblich von den anderen Markierungen unterscheidet. Alternativ kann auch automatisch das Objekt selektiert werden, welches sich am nächsten zu dem Bildzentrum befindet.

Das tragbare Endgerät 20 weist eine 3D-Kamera auf (nicht gezeigt), als auch verschiedene Tasten 22, welche zur Steuerung des tragbaren Endgeräts verwendet werden können, z. B. zum Zoomen, Aktivieren der Kamerafunktion, oder zum Steuern verschiedener Prozesse, wie beispielsweise einzelner Prozesse des erfindungsgemäßen Verfahrens zum Ansteuern eines Manipulator-Systems.

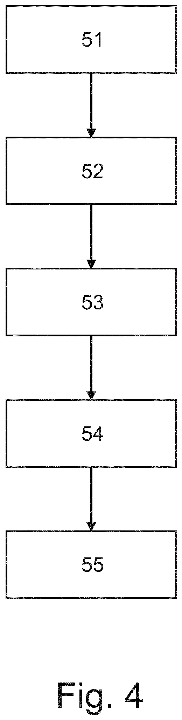

In Fig. 4 ist ein beispielhafter Ablauf eines erfindungsgemäßen Verfahrens zum Ansteuern eines Manipulator-Systems dargestellt. Dieses Verfahren wird im Folgenden unter Bezugnahme auf die in den übrigen Figuren dargestellten Komponenten beschrieben, ist jedoch nicht hierauf beschränkt.

Das Verfahren beginnt in Schritt 51, in welchem Geräte oder Objekte einer Applikationszelle eingelernt werden. Dazu werden die Geräte oder Objekte (beispielsweise ansteuerbare Komponenten des Manipulator-Systems 10) aus mehreren Richtungen mittels der 3D-Kamera eines tragbaren Endgeräts 20 aufgenommen, und die Geräte oder Objekte anhand dieser Aufnahmen eingelernt. In Schritt 52 kann ein Anwender für diese gelernten Objekte zusätzlich noch Teilobjekte definieren. Beispielsweise, wenn ein Roboterarm als ein ansteuerbares Objekt eingelernt wurde, können die einzelnen Gelenke des Roboterarms als Teilobjekte definiert werden. Ebenso können beispielsweise linke oder rechte Greifbacken eines Greifers als Teilobjekte des Greifers definiert werden. In Schritt 53 können den gelernten Objekten oder auch den definierten Teilobjekten bestimmte Aktionen oder Aufgaben zugewiesen werden.

In Schritt 54 wird festgestellt, dass für ein gewünschtes Objekt eine Aktion oder eine Aufgabe ausgewählt bzw. ausgeführt werden soll. Im vorliegenden Beispiel soll das autonome Transportfahrzeug 13 angesteuert werden. Hierzu drückt der Bediener 30 eine entsprechende Taste 22 des tragbaren Endgerätes 20, um die Kamerafunktion der 3D-Kamera zu aktivieren. Der Sucher der Kamera wird auf einen Teil des Manipulator-Systems 10 gerichtet, welcher das anzusteuernde Objekt zeigt bzw. beinhaltet. Das Darstellungsteil bzw. Touch-Display 21 des Endgeräts 20 zeigt den gewählten Bildausschnitt an.

In Schritt 55 wird zumindest ein Feature des Manipulator-Systems 10 basierend auf dem erfassten dreidimensionalen Bild ermittelt, und alle ansteuerbaren Objekte des Manipulator-Systems, welche in dem erfassten Bild enthalten sind, werden identifiziert und auf dem Touch-Display entsprechend markiert, z. B. durch blaue Symbole. Anschließend wählt der Bediener 30 das gewünschte anzusteuernde Objekt aus, und dieses wird angesteuert. Hierzu kann beispielsweise, nach dem Auswählen durch Tippen auf das Touch-Display 21, eine Liste von möglichen Aktionen auf dem Touch-Display 21 dargestellt werden, welche beispielsweise die Aktion "Drehen des Objektes" umfasst. Durch auswählen einer solchen Aktion wird das ausgewählte autonome Transportfahrzeug 13 durch eine entsprechende Steuerung derart angesteuert, dass sich dieses dreht.

### Bezugszeichenliste:

- 10: Manipulator-System
- 11: Gelenkarmroboter
- 12: Greifer
- 13: autonomes Transportfahrzeug
- 14, 15, 16: Sensoren
- 20: tragbares Endgerät
- 21: Touch-Display (Touch-Panel)
- 22: Tasten
- 30: Bediener
- 41, 42, 43, 43', 44, 45, 46: Markierungen

## Patentansprüche

1. Verfahren zum Ansteuern eines Manipulator-Systems (10) mittels eines tragbaren Endgerätes (20), wobei das tragbare Endgerät (20) eine Kamera umfasst, und wobei das Manipulator-System (10) zumindest zwei ansteuerbare Objekte (11, 12, 13, 14, 15, 16) aufweist, das Verfahren aufweisend folgende Schritte:
Bereitstellen von Referenz-Datensätzen des anzusteuernden Manipulator-Systems (10), umfassend ein Einlernen von zumindest den ansteuerbaren Objekten (11, 12, 13, 14, 15, 16) des Manipulator-Systems (10) mittels des tragbaren Endgerätes (20), wobei die Objekte (11, 12, 13, 14, 15, 16) aus mehreren Richtungen mittels der Kamera aufgenommen werden;
Erfassen eines Bildes mittels der Kamera des tragbaren Endgeräts (20) von zumindest einem Teil des anzusteuernden Manipulator-Systems (10);
Ermitteln eines Features des Manipulator-Systems (10) basierend auf dem erfassten Bild, wobei das Ermitteln des Features des Manipulator-Systems (10) ein Durchführen eines Bilderkennungsprozesses umfasst, welcher das Feature auf Grundlage von dem erfassten Bild und den bereitgestellten Referenz-Datensätzen erkennt;
Identifizieren aller ansteuerbaren Objekte (11, 12, 13, 14, 15, 16) des Manipulator-Systems (10) basierend auf dem erfassten Bild;
Auswählen zumindest eines ansteuerbaren Objektes (11, 12, 13, 14, 15, 16) des Manipulator-Systems (10), und
Ansteuern des Objektes (11, 12, 13, 14, 15, 16) des Manipulator-Systems (10).

2. Verfahren nach Anspruch 1, wobei die Kamera eine 3D-Kamera ist und das erfasste Bild ein dreidimensionales Bild ist.

3. Verfahren nach einem der voranstehenden Ansprüche,
wobei das tragbare Endgerät (20) eine Darstellungsvorrichtung umfasst, welche Darstellungsvorrichtung vorzugsweise ein Touch-Panel (21) umfasst, und
wobei das Verfahren ferner ein Darstellen des erfassten Bildes auf der Darstellungsvorrichtung des tragbaren Endgeräts (20) umfasst, vorzugsweise ferner aufweisend ein Darstellen einer optischen Markierung (41, 42, 43, 43', 44, 45, 46) auf der Darstellungsvorrichtung des tragbaren Endgeräts (20), welche optische Markierung eines der identifizierten Objekte (11, 12, 13, 14, 15, 16) des Manipulator-Systems (10) spezifiziert.

4. Verfahren nach Anspruch 3, wobei das Auswählen des Objektes (11, 12, 13, 14, 15, 16) des Manipulator-Systems (10) ein Anwählen des Objekts (11, 12, 13, 14, 15, 16) des Manipulator-Systems (10) durch einen Benutzer (30) des tragbaren Endgerätes (20) umfasst,
wobei vorzugsweise das Anwählen des Objekts (11, 12, 13, 14, 15, 16) des Manipulator-Systems (10) ein Anwählen der optischen Markierung (41, 42, 43, 43', 44, 45, 46) auf der Darstellungsvorrichtung des tragbaren Endgeräts (20) umfasst.

5. Verfahren nach einem der Ansprüche 3 oder 4, wobei zumindest zwei ansteuerbare Objekte (11, 12, 13, 14, 15, 16) des Manipulator-Systems (10) identifiziert werden und zumindest zwei optische Markierungen (41, 42, 43, 43', 44, 45, 46) auf der Darstellungsvorrichtung des tragbaren Endgerätes (20) dargestellt werden, wobei jede optische Markierung (41, 42, 43, 43', 44, 45, 46) eines der identifizierten Objekte (11, 12, 13, 14, 15, 16) des Manipulator-Systems (10) spezifiziert.

6. Verfahren nach einem der voranstehenden Ansprüche, wobei das Ansteuern des Objektes (11, 12, 13, 14, 15, 16) des Manipulator-Systems (10) ein Anfragen, Bereitstellen, Erstellen und/oder Ändern von Daten des Manipulator-Systems (10) umfasst, welche Daten vorzugsweise zumindest eines der folgenden beschreiben:
- Justage und/oder Orientierung eines Manipulators,
- Parametrisierung eines Endeffektors,
- Kalibrierung des Manipulators und/oder des Endeffektors,
- Definition eines Arbeitsbereiches,
- Parametrisierung des Objektes des Manipulator-Systems (10),
- Definition eines Koordinatensystems,
- Einen Programmablauf.

7. Verfahren nach einem der voranstehenden Ansprüche, wobei das Ansteuern des Objektes (11, 12, 13, 14, 15, 16) des Manipulator-Systems (10) ein Erstellen, Ändern und/oder Durchführen einer Funktion oder eines Programms umfasst, wodurch vorzugsweise zumindest eines der folgenden durchgeführt wird:
- Aktion eines Endeffektors,
- Bewegung des Objektes des Manipulator-Systems (10),
- Steuerung des Objektes des Manipulator-Systems (10),
- Bewegung eines Manipulators,
- Steuerung des Manipulators,
- Änderung eines Programmablaufs.

8. Verfahren nach einem der Ansprüche 3 bis 7, wobei das Verfahren ferner ein Darstellen von kontextabhängigen Daten unter Berücksichtigung des ausgewählten Objektes (11, 12, 13, 14, 15, 16) umfasst, wobei das Darstellen der kontextabhängigen Daten vorzugsweise weiter unter Berücksichtigung einer Benutzereingabe erfolgt.

9. Verfahren nach einem der voranstehenden Ansprüche, wobei die Kamera eine plenoptische Kamera ist, und wobei das Erfassen des Bildes ein Erfassen eines vierdimensionalen Lichtfeldes mittels der plenoptischen Kamera von dem zumindest einen Teil des anzusteuernden Manipulator-Systems (10) umfasst.

10. Tragbares Endgerät (20), umfassend eine Kamera und eine Gerätesteuerung, wobei die Gerätesteuerung eingerichtet ist ein Verfahren nach einem der Ansprüche 1 bis 9 durchzuführen.

11. Manipulator-System, umfassend einen Manipulator (10), zumindest zwei ansteuerbare Objekte (11, 12, 13, 14, 15, 16) und ein tragbares Endgerät (20), welches eine Kamera umfasst, wobei das Manipulator-System ferner eine Manipulatorsteuerung aufweist, welche eingerichtet ist ein Verfahren nach einem der Ansprüche 1 bis 9 durchzuführen.

12. Tragbares Endgerät (20) nach Anspruch 10 oder Manipulator-System nach Anspruch 11, wobei die Kamera eine 3D-Kamera und vorzugsweise eine plenoptische Kamera ist.

## Claims

1. A method for actuating a manipulator system (10) by means of a portable terminal device (20), wherein the portable terminal device (20) comprises a camera, and wherein the manipulator system (10) has at least two actuatable objects (11, 12, 13, 14, 15, 16), the method having the following steps:
Providing reference data sets of the manipulator system (10) to be actuated, comprising teaching in at least the actuatable objects (11, 12, 13, 14, 15, 16) of the manipulator system (10) by means of the portable terminal device (20), wherein the objects (11, 12, 13, 14, 15, 16) are recorded from multiple directions by means of the camera;
Capturing an image, by means of the camera of the portable terminal device (20), of at least a part of the manipulator system (10) to be actuated;
Determining a feature of the manipulator system (10) based on the captured image, wherein determining the feature of the manipulator system (10) comprises performing an image recognition process that recognizes the feature on the basis of the captured image and the provided reference data sets;
Identifying all actuatable objects (11, 12, 13, 14, 15, 16) of the manipulator system (10) based on the captured image;
Selecting at least one actuatable object (11, 12, 13, 14, 15, 16) of the manipulator system (10), and
Actuating the object (11, 12, 13, 14, 15, 16) of the manipulator system (10).

2. The method of claim 1, wherein the camera is a 3D camera and the captured image is a three-dimensional image.

3. The method according to one of the preceding claims,
wherein the portable terminal device (20) comprises a display apparatus, which display apparatus preferably comprises a touch panel (21), and
wherein the method further comprises displaying the captured image on the display apparatus of the portable terminal device (20), preferably further having a displaying of an optical mark (41, 42, 43, 43', 44, 45, 46) on the display apparatus of the portable terminal device (20) which optical mark specifies one of the identified objects (11, 12, 13, 14, 15, 16) of the manipulator system (10).

4. The method according to claim 3, wherein the selecting the object (11, 12, 13, 14, 15, 16) of the manipulator system (10) comprises a choosing of the object (11, 12, 13, 14, 15, 16) of the manipulator system (10) by a user (30) of the portable terminal device (20),
wherein preferably the choosing of the object (11, 12, 13, 14, 15, 16) of the manipulator system (10) comprises a choosing of the optical mark (41, 42, 43, 43', 44, 45, 46) on the display apparatus of the portable terminal device (20).

5. The method according to one of the claims 3 or 4, wherein at least two actuatable objects (11, 12, 13, 14, 15, 16) of the manipulator system (10) are identified and at least two optical marks (41, 42, 43, 43', 44, 45, 46) are displayed on the display apparatus of the portable terminal device (20), wherein each optical mark (41, 42, 43, 43', 44, 45, 46) specifies one of the identified objects (11, 12, 13, 14, 15, 16) of the manipulator system (10).

6. The method according to one of the preceding claims, wherein the actuation of the object (11, 12, 13, 14, 15, 16) of the manipulator system (10) comprises a requesting, providing, creating and/or changing of data of the manipulator system (10), which data preferably describes at least one of the following:
- Adjustment and/or orientation of a manipulator,
- Parameterization of an end effector,
- Calibration of the manipulator and/or the end effector,
- Definition of a working area,
- Parameterization of the object of the manipulator system (10),
- Definition of a coordinate system,
- A program flow.

7. The method according to one of the preceding claims, wherein the actuation of the object (11, 12, 13, 14, 15, 16) of the manipulator system (10) comprises a creating, changing and/or performing a function or program, whereby preferably at least one of the following is performed:
- Action of an end effector,
- Movement of the object of the manipulator system (10),
- Control of the object of the manipulator system (10),
- Movement of a manipulator,
- Control of the manipulator,
- Change of a program flow.

8. The method according to one of the claims 3 to 7, wherein the method further comprises a displaying of context-dependent data under consideration of the selected object (11, 12, 13, 14, 15, 16), wherein the displaying of the context-dependent data preferably further takes place under consideration of a user input.

9. The method according to one of the preceding claims, wherein the camera is a plenoptic camera, and wherein capturing the image comprises capturing a four-dimensional light field by means of the plenoptic camera of the at least one part of the manipulator system (10) to be actuated.

10. A portable terminal device (20) comprising a camera and a device control, wherein the device control is configured to perform a method according to one of the claims 1 to 9.

11. A manipulator system comprising a manipulator (10), at least two actuatable objects (11, 12, 13, 14, 15, 16) and a portable terminal device (20) comprising a camera, wherein the manipulator system further has a manipulator control configured to perform a method according to one of the claims 1 to 9.

12. A portable terminal device (20) according to claim 10 or manipulator system according to claim 11, wherein the camera is a 3D camera and preferably a plenoptic camera.

## Revendications

1. Procédé de commande d'un système de manipulateur (10) au moyen d'un terminal portable (20), le terminal portable (20) incluant une caméra, et le système de manipulateur (10) comportant au moins deux objets commandables (11, 12, 13, 14, 15, 16), le procédé comportant les étapes suivantes :
production d'ensembles de données de référence du système de manipulateur à commander (10), incluant un apprentissage d'au moins les objets commandables (11, 12, 13, 14, 15, 16) du système de manipulateur (10) au moyen du terminal portable (20), les objets (11, 12, 13, 14, 15, 16) étant enregistrés depuis plusieurs directions au moyen de la caméra ;
saisie d'une image, au moyen de la caméra du terminal portable (20), d'au moins une partie du système de manipulateur à commander (10) ;
détection d'une caractéristique du système de manipulateur (10) sur la base de l'image saisie, la détection de la caractéristique du système de manipulateur (10) incluant une réalisation d'un processus de reconnaissance d'image qui reconnaît la caractéristique sur la base de l'image saisie et des ensembles de données de référence produits ;
identification de tous les objets commandables (11, 12, 13, 14, 15, 16) du système de manipulateur (10) sur la base de l'image saisie ;
sélection d'au moins un objet commandable (11, 12, 13, 14, 15, 16) du système de manipulateur (10), et commande de l'objet (11, 12, 13, 14, 15, 16) du système de manipulateur (10).

2. Procédé selon la revendication 1, dans lequel la caméra est une caméra 3D, et l'image saisie est une image tridimensionnelle.

3. Procédé selon l'une des revendications précédentes, dans lequel le terminal portable (20) inclut un dispositif de représentation, lequel dispositif de représentation inclut de préférence une zone tactile (21), et
dans lequel le procédé inclut en outre une représentation de l'image saisie sur le dispositif de représentation du terminal portable (20), de préférence comprenant en outre une représentation d'un repère optique (41, 42, 43, 43', 44, 45, 46) sur le dispositif de représentation du terminal portable (20), lequel repère optique spécifie un des objets identifiés (11, 12, 13, 14, 15, 16) du système de manipulateur (10).

4. Procédé selon la revendication 3, dans lequel la sélection de l'objet (11, 12, 13, 14, 15, 16) du système de manipulateur (10) inclut une sélection de l'objet (11, 12, 13, 14, 15, 16) du système de manipulateur (10) par un utilisateur (30) du terminal portable (20), dans lequel la sélection de l'objet (11, 12, 13, 14, 15, 16) du système de manipulateur (10) inclut de préférence une sélection du repère optique (41, 42, 43, 43', 44, 45, 46) sur le dispositif de représentation du terminal portable (20).

5. Procédé selon l'une des revendications 3 ou 4, dans lequel au moins deux objets commandables (11, 12, 13, 14, 15, 16) du système de manipulateur (10) sont identifiés, et au moins deux repères optiques (41, 42, 43, 43', 44, 45, 46) sont représentés sur le dispositif de représentation du terminal portable (20), chaque repère optique (41, 42, 43, 43', 44, 45, 46) spécifiant un des objets identifiés (11, 12, 13, 14, 15, 16) du système de manipulateur (10).

6. Procédé selon l'une des revendications précédentes, dans lequel la commande de l'objet (11, 12, 13, 14, 15, 16) du système de manipulateur (10) inclut une consultation, production, création et/ou modification de données du système de manipulateur (10), lesquelles données décrivent de préférence au moins une des opérations suivantes :
- alignement et/ou orientation d'un manipulateur,
- paramétrage d'un effecteur terminal,
- calibrage du manipulateur et/ou de l'effecteur terminal,
- définition d'une zone de travail,
- paramétrage de l'objet du système de manipulateur (10) ,
- définition d'un système de coordonnées,
- une exécution de programme.

7. Procédé selon l'une des revendications précédentes, dans lequel la commande de l'objet (11, 12, 13, 14, 15, 16) du système de manipulateur (10) inclut une création, modification et/ou réalisation d'une fonction ou d'un programme permettant de réaliser de préférence une des opérations suivantes :
- action d'un effecteur terminal,
- mouvement de l'objet du système de manipulateur (10),
- commande de l'objet du système de manipulateur (10),
- mouvement d'un manipulateur,
- commande du manipulateur,
- modification d'une exécution de programme.

8. Procédé selon l'une des revendications 3 à 7, dans lequel le procédé inclut en outre une représentation de données dépendantes du contexte en tenant compte de l'objet sélectionné (11, 12, 13, 14, 15, 16), la représentation des données dépendantes du contexte s'effectuant de préférence en tenant également compte d'une entrée utilisateur.

9. Procédé selon l'une des revendications précédentes, dans lequel la caméra est une caméra plénoptique, et dans lequel la saisie de l'image inclut une saisie d'un champ de lumière quadridimensionnel, au moyen de la caméra plénoptique, de l'au moins une partie du système de manipulateur à commander (10).

10. Terminal portable (20) incluant une caméra et une commande d'appareil, dans lequel la commande d'appareil est agencée pour réaliser un procédé selon une des revendications 1 à 9.

11. Système de manipulateur incluant un manipulateur (10), au moins deux objets commandables (11, 12, 13, 14, 15, 16) et un terminal portable (20) qui inclut une caméra, dans lequel le système de manipulateur comporte en outre une commande de manipulateur qui est agencée pour réaliser un procédé selon l'une des revendications 1 à 9.

12. Terminal portable (20) selon la revendication 10 ou système de manipulateur selon la revendication 11, dans lequel la caméra est une caméra 3D, et de préférence une caméra plénoptique.
